# EUROPEAN PATENT SPECIFICATION

(11) **EP 2 962 045 B1**
(45) Date of publication and mention of the grant of the patent: **11.08.2021**
(21) Application number: 14709388.4
(22) Date of filing: 28.02.2014
(51) Int. Cl.: F24F 11/00

(54) **COMMISSIONING SYSTEM FOR VENTILATON SYSTEM**
INBETRIEBNAHMESYSTEM FÜR EINE BELÜFTUNGSANLAGE
SYSTÈME DE MISE EN SERVICE POUR SYSTÈME DE VENTILATON

(30) Priority: 28.02.2013 GB 201303584
(43) Date of publication of application: 06.01.2016
(73) Proprietor: Zehnder Group UK Limited, Watchmoor Point Camberley Surrey GU15 3AD (GB)
(72) Inventor: SWEENEY, Paul, Rustington Sussex BN16 3LF (GB); CROKE, Anthony Laurence, Rustington Sussex BN16 3LF (GB)
(74) Representative: Dehns
(86) International application number: PCT/GB2014/050598
(87) International publication number: WO 2014/132075

(56) References cited:
- WO-A2-93/07549
- WO-A2-2010/120429
- US-A1- 2007 084 939
- US-A1- 2007 289 322

## Description

The invention relates to the initial commissioning step for ventilation systems to set up the system correctly for a given building or installation.

The invention relates to domestic whole house ventilation systems, or more generally to whole building ventilation systems.

Ventilation systems can either be balanced or unbalanced. In an unbalanced system, air is extracted from a building (typically certain areas of the building such as kitchens and bathrooms) and is expelled to the outside in order to get rid of unwanted moisture and/or odours. The system relies on the extracted air being replaced naturally by air flowing into the building through natural openings, such as through window vents, or under doors. This system works well in older "leakier" buildings where there are plenty of natural openings through which air can enter or leave the building. Another type of unbalanced system is a positive pressure ventilation system in which air is drawn into the building by a fan (through ducts) and optionally heated to create a slightly raised pressure within the building. Air then leaks out through the building's natural openings.

However in more modern buildings improved seals tend to be employed around windows and doors in order to improve the thermal efficiency of the building and reduce the amount of warm air escaping from within the building. In such cases, a balanced ventilation system may be more appropriate. A balanced ventilation system does not just extract air from the building and exhaust it to the outside, but also draws replacement air into the building, thus maintaining the air pressure within the building. Such systems therefore have one flow path for air coming into the building and another flow path for air being expelled from the building. The air being drawn in from outside is typically colder than the air being expelled and therefore, for improved thermal efficiency, a heat exchanger can be employed to transfer some of the heat from the outgoing air flow into the incoming air flow.

The invention applies to both balanced and unbalanced systems, but it is particularly advantageous for balanced systems.

In many ventilation systems the central control unit is supplied with default settings for a "typical" building or installation. When the unit is installed, the installer is then supposed to set up the various ventilation rates and the supply and exhaust valves within the building to adjust the air flow rates to be optimal. However there is a problem in that installers are often not properly trained in the best practice for setting up the system. As a consequence many installers will get the installation wrong, or sub-optimal or they may reach an optimal set up, but the process takes them much longer than it should. An incorrect configuration may lead to stale air and/or mould within the building.

A further problem is that installers under time pressure to complete a job may not configure the system at all, simply leaving the unit on its default settings. For a non-skilled observer without measuring equipment, it can be difficult to tell that configuration has not been performed or is non-optimal. US 2007/289322 is the prior art closest to the invention and discloses the preamble of claim 1.

According to a first aspect, the invention provides a ventilation system comprising a control unit for controlling extraction and/or supply of air within a building, wherein said control unit is arranged such that it will not operate to supply and/or extract air until after a setup program has been successfully completed.

By requiring that the setup program be successfully completed before operation of the system is permitted, the system is prevented from being left uncommissioned (unconfigured) after its initial installation. If an installer leaves the unit without running the setup program it will be immediately apparent to an inspector or to a user of the building as the system simply will not operate. When the unit is inspected, the only option presented to the user will be to run the setup program.

Such a unit does not revert to default configuration values if the setup program is not run. Instead, the unit will remain inoperational until the setup program has been completed. The system may provide default (or starting) values as part of the setup process, but it requires each setup step to be performed (i.e. a value positively selected by the user) before normal operation of the unit is permitted. Even if a default value is provided by the unit, the setup process demands that it must be reviewed and positively accepted by the installer rather than passively accepted. Setup steps cannot be skipped easily.

In preferred embodiments the system comprises a control unit for controlling extraction and/or supply of air within a building, said control unit is capable of switching at least one fan between a trickle speed and a boost speed, said control unit is provided with said setup program, and said setup program requires a user to set the boost fan speed before setting the trickle fan speed.

As described above, there are a number of different types of ventilation system, including positive pressure ventilation systems, unbalanced extraction systems and balanced systems (optionally with a heat exchanger exchanging heat between the incoming and outgoing airflows).

The invention can apply to positive pressure ventilation systems which only supply air into a building (i.e. a system which has no extraction fans). The system ensures that the supply boost speed is set before the supply trickle speed. The boost speed is determined by the requirements of the system under its harshest operating conditions, whereas the trickle speed is a lower value for continuous operation, e.g. for conditions which are not the most harsh. The trickle speed cannot be greater than the boost speed and it is therefore necessary to set the boost speed first to ensure that the system is capable of meeting the most demanding requirements. The boost speed and the trickle speed both depend on the resistance provided by adjustable vents provided within each extraction room. However, the regulations typically stipulate air flow requirements for the boost speed in each room, whereas the regulations typically stipulate air flow requirements for the trickle speed for the whole house. Therefore setting the trickle speed does not require adjustment of the valves and thus it should be set after the boost speed (and any necessary valve adjustment performed as part of that process).

However, the invention provides much greater benefit for extraction systems as the importance of the boost and trickle settings tends to be greater. Therefore, in preferred embodiments the system comprises an extraction fan.

The extraction fan is typically used to extract air from the wet rooms of the building, e.g. the bathroom, WC and kitchen (although in principle extraction can occur from any rooms in the building). A typical installation of the ventilation system will have two or more such rooms requiring extraction. Each room is connected via ducting to the main ventilation unit with the extraction fan. The rooms will typically be of different sizes and require different air flow rates, e.g. as defined by regulations. Each extraction point of the system is therefore provided with a valve which can be adjusted to vary the airflow rate. During the commissioning process (i.e. setting up the system for optimal ventilation), the installer needs to adjust the extract valves in the various rooms to achieve the right balance between the rooms. In addition, the overall fan speed needs to be set on the main unit (as part of the setup program) to vary the actual rates at each of the valves. In other words, in a particular room, the extraction rate is dependent on both the overall fan speed setting for the building and the valve setting for that room. The installer uses an anemometer to measure the airflow through each valve and adjusts the valves and the fan speed to achieve the correct air extraction rate in each of the rooms. This process may well be an iterative process requiring several adjustments of the fan speed and the valves before the optimal settings are reached. The process of the invention helps to minimize the number of iterations by guiding the installer through the correct sequence of setup steps. Installers are often not adequately trained in the best practice setup procedure and therefore can struggle to get the settings right when they perform the steps in the wrong order.

The extraction fan boost speed is the speed required to satisfactorily exhaust moist or odorous air efficiently from all rooms under the harshest conditions, e.g. during or immediately after a shower in a bathroom, or when a kitchen is being used for cooking. This represents the most critical rate for the system and therefore should be set first in the setup process. The trickle speed cannot be greater than the boost speed and, although there may be regulatory guidance for the trickle speed, e.g. based on floor area and/or number of inhabitants, its importance is generally less than the boost speed. If the trickle speed is adjusted first, subsequent adjustment of the valves which is required during the boost speed adjustment step will alter the airflow rate that was set for trickle speed and will thus invalidate the trickle speed setting.

Prior art units typically provide access to the unit's settings via a settings menu. Each setting can be accessed individually and there is no setup program to guide the user to follow a particular sequence for optimal setup. Many installers who have not been properly trained may therefore be inclined to set up the trickle extract speed before setting the boost extract speed. According to the invention this is not possible as the commissioning process follows a specific sequence, guiding the installer through the optimal setup process and requiring the setting of the extract boost speed ahead of setting the extract trickle speed.

Although the system may be an extraction only system, it is also particularly beneficial for a balanced ventilation system, i.e. one with both a supply fan and an extract fan. Such systems preferably have a heat exchanger arranged to exchange heat between the incoming and outgoing airflows so as to minimize energy losses due to the exchange of air. Therefore in preferred embodiments, the unit further comprises at least one supply fan and the unit is capable of switching said supply fan between a trickle speed and a boost speed.

In such a system, the same principles apply as set out above, i.e. the extract boost speed should be set before the extract trickle speed. Similarly the supply boost speed should be set before the supply trickle speed. Additionally, the extraction system performs the most critical function of exhausting unwanted moist or odorous air from the building and thus it is optimal (and preferred) that the extract boost speed is set before the supply boost speed. The supply boost speed needs to match the air supply into the building during boost operation with the air extracted from the building during boost operation and therefore this represents the next most important setting of the system to balance the fans during boost. Therefore preferably the supply boost speed is set before the extract trickle speed and the supply trickle speed. Preferably therefore the set up process requires the user to set up the four fan speeds in the specific order: extract boost speed, supply boost speed, extract trickle speed, then supply trickle speed. Additionally, as the two boost speeds are the fastest fan speeds, if either of these steps cannot be adequately set, it will be apparent that the unit is not big enough. Further time is not wasted on setup of trickle speeds when the unit needs to be replaced.

As described above, in preferred embodiments, the system comprises at least one extract valve within the building through which air is extracted and at least one supply valve within the building through which air is supplied.

In preferred embodiments, the system comprises at least two extract valves within the building through which air is extracted.

In preferred embodiments, the system comprises at least two supply valves within the building through which air is supplied.

It is desired to keep the user controls for executing the setup program as simple as possible. The setup program may be controlled by means of a rotary dial and a button. The program preferably comprises a sequence of steps to be stepped through, with values to be adjusted and selected at each step. Fan speeds are typically adjusted to a percentage of the maximum fan speed and so require selection of a number between 0 and 100. Other steps may require the setting of an option which may be a choice of two or more options (e.g. "on" and "off'). The ventilation system preferably has a display for displaying the step of the program and the option currently set or selected. The rotary dial provides a convenient way for the user to adjust the value over a large range (e.g. from 0 to 100) or to select between two or more options. The sensitivity of the dial can be changed depending on the step currently under configuration. For example the dial may be more sensitive when setting a value from a large range than when selecting from a small range (e.g. requiring less movement of the dial to change a percentage value by one point than is required to change between "on" and "off' settings). Alternatively the sensitivity may be the same for both situations. This may particularly be the case where the dial has haptic feedback such as a click indicating a change of value. The button provides an input mechanim to confirm the value selected or to switch between a menu navigation mode and a setting adjustment mode.

In a particularly preferred embodiment the rotary dial is also the button, i.e. the rotary dial can be rotated to adjust values or it can be pushed to select a value or to change mode.

According to a second aspect, the invention provides a method of commissioning a ventilation system for use after installation, comprising: activating a setup program, said setup program comprising a sequence of a plurality of setup steps for execution by a user; presenting said plurality of setup steps to the user in sequence; and only after said setup program has been fully executed successfully, enabling operation of said ventilation system.

All of the preferred features described above in relation to the apparatus are equally applicable to this method.

The setup process can be advantageously used even if it is not required before the unit will operate. The process guides the installer through the optimal process for setting up the system, thus ensuring that the system is set up in accordance with best practice and will operate efficiently.

Preferred embodiments of the invention will now be described, by way of example only, and with reference to the accompanying drawings in which:
Figure 1 shows an example control interface for a ventilation unit; and
Figure 2 is a flow chart showing an embodiment of a setup process according to the invention.

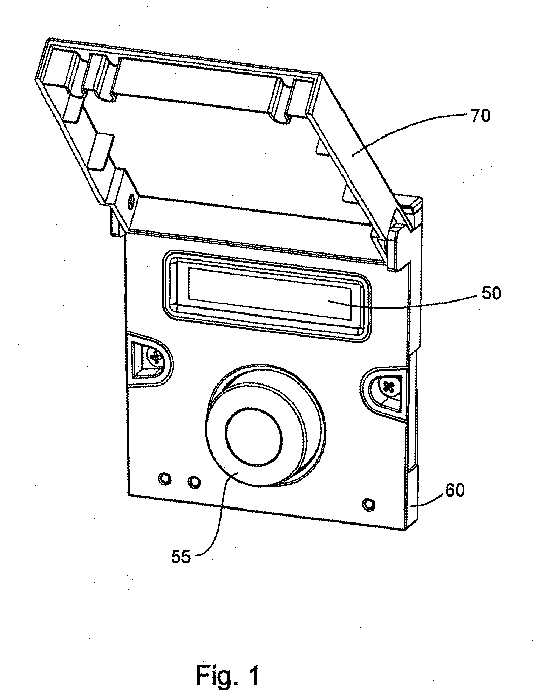

Figure 1 shows the control interface 60 of a ventilation unit. The interface 60 has a display 50 which in this case is a two line LCD display, each line having 16 character portions, each capable of displaying an alphanumeric character. The interface 60 also has a knob 55. The knob 55 is rotatable both clockwise and anticlockwise so as to adjust values or select different options. The knob 55 is also a button which can be depressed to activate or confirm a selection. This simple interface makes the setup process easy and intuitive for the installer. It will be appreciated that in other embodiments the knob and button may be separate controls. A lid 70 covers the interface 60 when it is not in use. The lid 70 has been lifted in Fig. 1 so as to reveal the display 50 and the knob 55 for access and configuration.

In the following description, the knob 55 is referred to both as a knob and as a button according to the context, but it will be appreciated that in this embodiment these refer to different actions performed on the same control.

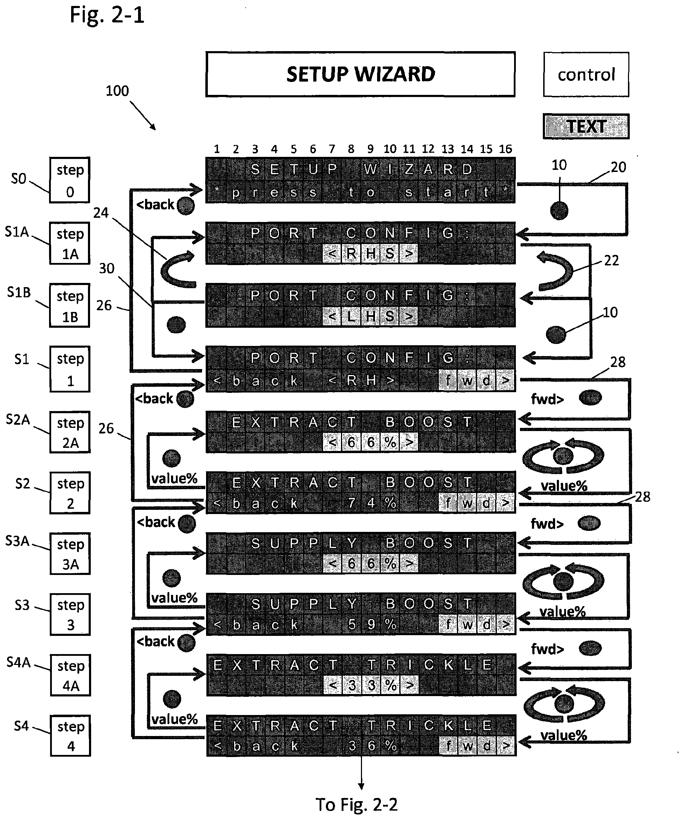

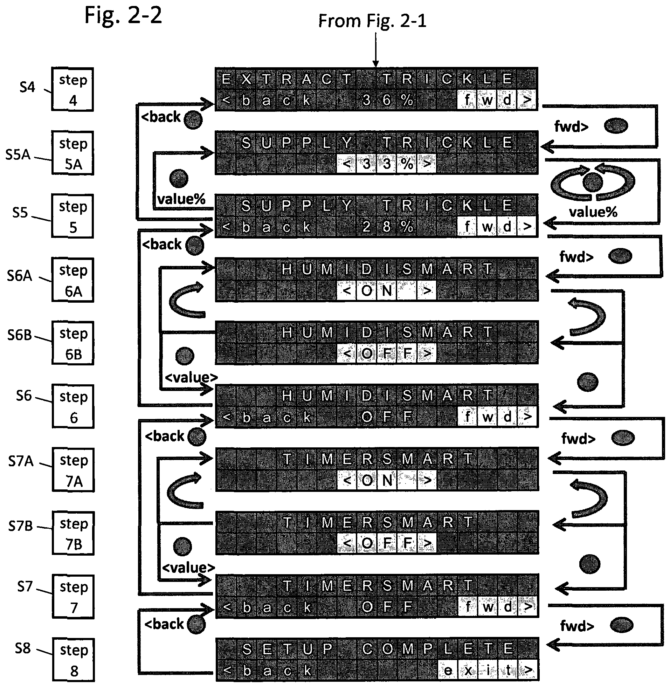

Fig. 2 is a flow diagram which shows the sequence of steps which must be followed when the setup program ("setup wizard") is activated.

After installation of the ventilation system, i.e. when the control unit is first switched on, the setup program must be run before the unit will operate. The unit thus forces the installer to go through the setup process to configure (or commission) the unit for proper operation. It does not under any circumstances revert to operation at default values without the installer having gone through the setup process. This way it is easy for an inspector or a user to tell if a unit has not been properly configured as the unit will not be operational and any attempt to activate the unit will result in a prompt to run the setup wizard program.

After installation of the unit, the knob / button 55 is depressed to start the program. In Fig. 2, the central column shows the text that appears on display 50 at each stage. To the left and right of the central column, the symbols indicate possible actions by the user / installer using the knob / button 55 as the input means. The curved arrows 22, 24 indicate rotation of the knob 55 while the small circle 10 indicates a press of the knob 55 (using it as a button). In the sample screens in the central column, the text with the lighter background shows a highlighted portion of the screen. This may be implemented with different colours (foreground and/or background) or brightness of screen, or it may be implemented with flashing text or similar. The highlighted portion indicates to the user / installer what action is currently available for selection or adjustment. This will be described further below.

The program starts at step 0 (labelled S0 in Fig. 2). The initial message displayed on screen 50 is simply an indication that the setup wizard has not yet been run. The user is invited to "press to start". If no action is taken, the program will time out and the display will be put to sleep. However, if button 55 is depressed, the program moves on to step 1A (labelled S1A).

Step 1A is a port configuration step. Many ventilation units can be set up in one of two configurations (usually referred to as "handedness", i.e. left-handed or right-handed). This allows the installer greater flexibility with regard to the location of installation and with respect to the extract and supply ducts that carry air to and from the vents within the building's rooms. Many units are configured in a purely mechanical fashion by allowing the installer to physically install the unit in two different orientations (usually involving swapping filters and possibly the control PCB or other electrical connections to different locations on the unit). Such units may not require an electronic configuration step to tell the unit which way round it has been installed. However, in this particular embodiment the device is able to switch its mode of operation electronically (i.e. simply by altering its control of the fans according to the setting selected by the user). This simplifies the installation process. Accordingly, step 1A is optional and may not be required in units where the handedness is set in a purely physical fashion or via a mechanical switch. However, in this preferred embodiment, the setup step is required to tell the unit in which configuration the unit has been installed.

Step 1A shows the value "RHS" highlighted for right-handed setting. As indicated in Fig. 2 to the right of the central column by arrow 22, rotating knob 55 will change the value to "LHS" for left-handed setting as shown in step 1B. Similarly, as indicated by arrow 24 to the left of the central column in Fig. 2, rotating knob 55 in step 1B will change the value back to "RHS". In steps 1A and 1B the value "RHS" or "LHS" is highlighted as described above to indicate that it can be altered. As shown by the small circle 10 to the right of the central column in Fig. 2, pressing knob 55 from either of steps 1A or 1B will select the currently highlighted value and move the program to step 1 (S1).

Step 1 can be considered a parent of steps 1A and 1B (and steps 1A and 1B are thus children of step 1). From step 1, the user is presented with three selectable options. These are shown in Fig. 2 as "<back", "<RH>" and "fwd>". Rotation of knob 55 will move the highlight between these three options. The "<back" option takes the user back to step 0, i.e. the start of the wizard as indicated by arrow 26. The "fwd>" option takes the user forward to the next step as shown by arrow 28. The central option shows the currently selected port configuration value, in this case "<RH>" indicates that the right-handed option has been set. If the user presses the button 55 while this option is highlighted, the program proceeds to step 1A or 1B as appropriate (and as indicated by arrow 30) to allow the setting to be changed. Step 1 therefore allows a review of the currently set value before proceeding to the next step of the setup program.

It will be appreciated that the program does not move directly from step 0 to step 1 so that the installer is not immediately presented with the option to proceed to step 2 without first having to select a value for the port configuration. Instead, step 0 proceeds to one of the child steps, step 1A, forcing the installer to make a selection before the program proceeds to the next setup step.

During later operation, if the unit is to be reconfigured or adjusted, the menu system may allow free movement between steps 0 and 1 without forcing the user into a child step. However, during the initial installation, the program forces a positive selection to be made in each step.

After the port configuration has been done (if the unit requires this step), the setup program moves on to step 2A (S2A) which prompts the user to set the Extract Boost setting. This is a fan speed, expressed as a percentage of maximum fan speed. At this point the value (shown in Fig. 2 as "<66%>") is highlighted indicating that rotation of the knob 55 will change that value. The installer thus rotates the knob 55 until the correct value is attained, and when he or she is happy, the knob 55 is depressed to select that value. The program then proceeds to step 2 (S2).

Again, step 2 is a parent step to step 2A, but the setup program forces the user from step 1 directly into the child step 2A so as to force the installer to go through the process of selecting a value. Thus the step cannot accidentally (or carelessly) be skipped.

The process of setting the extract boost value is the most important aspect of fan speed configuration and according to best practice, it needs to be set first, before setting the extract trickle speed or any supply speeds. The setup program thus guides the installer directly into the most optimal step, requiring that value to be set before prompting for values for any other system parameters.

During the process of setting the correct extract boost value, the installer should be adjusting the valves in the various extraction rooms in the building (e.g. WC, bathroom, kitchen) to achieve the right balance of extraction power between those rooms. The extract boost setting on the control unit (in step 2A) is adjusted to get the overall power for the building right. This process may be an iterative process.

Step 2 is similar to step 1 in that it provides "<back" and "fwd>" options for moving between setup steps. The central option, shown in Fig. 2 as "74%" to indicate that the final value selected in step 2A was 74%, is also selectable by depressing button 55 so as to return to step 2A for adjustment of the value.

If the user selects "<back" from step 2, the program moves to step 1 (as indicated by arrow 26 in Fig. 2). In this case, as the port configuration step has already been carried out once, the unit allows the user to move back to the parent menu step (i.e. step 1) rather than forcing the user into a child step (i.e. step 1A or 1B).

When the user selects "fwd>" from step 2, the program moves to step 3A (S3A) as indicated by arrow 28 in Fig. 2. Step 3A provides for the adjustment of the supply boost value. As before, the value (shown in Fig. 2 as "<66%>") is highlighted and is thus adjustable by rotation of the knob 55. When the appropriate value has been determined, it is selected by depressing button 55. The program then proceeds to step 3 (S3) which shows the "<back" and "fwd>" options as described in relation to steps 1 and 2 and the currently set value, shown in Fig. 2 as "59%" to show that the user selected 59% in step 3A.

When the user selects "<back" from step 3, the user is taken directly to the parent menu step 2. When the user selects "fwd>" from step 3, the user is taken directly to child step 4A (S4A) for setting the extract trickle fan speed. A value for the extract trickle fan speed is set in a similar way to the extract and supply boost speeds. Once a value has been set (36% in Fig. 2), the program proceeds to parent step 4 (S4) which is similar to steps 2 and 3.

From parent step 4, selecting "<back" takes the program back to parent step 3, while selecting "fwd>" takes the program to child step 5A (S5A) for setting the supply trickle fan speed. A value for the supply trickle fan speed is set in a similar way to the extract and supply boost speeds and the extract trickle speed. Once a value has been set (28% in Fig. 2), the program proceeds to parent step 5 (S5) which is similar to steps 2, 3 and 4.

From parent step 5, selecting "<back" takes the program back to parent step 4, while selecting "fwd>" takes the program to child step 6A (S6A) for selecting whether or not to enable a "HUMIDISMART" option. This option determines how the system responds to humidity information supplied from sensors in one or more of the building's rooms. Steps 6, 6A and 6B are similar to steps 1, 1A and 1B. In step 6A the "<ON>" option is selected. Rotation of the knob 55 moves the program to step 6B (S6B) in which the "<OFF>" option is selected. From either of these steps, pushing the button 55 selects that value and moves the program to parent step 6 (S6), which in Fig. 2 shows that "OFF" was selected.

From parent step 6, selecting "<back" takes the program back to parent step 5, while selecting "fwd>" takes the program to child step 7A (S7A) for selecting whether or not to enable a "TIMERSMART" option. This option determines how the system's overrun timers operate. Steps 7, 7A and 7B are similar to steps 1, 1A and 1B. In step 7A the "<ON>" option is selected. Rotation of the knob 55 moves the program to step 7B (S7B) in which the "<OFF>" option is selected. From either of these steps, pushing the button 55 selects that value and moves the program to parent step 7 (S7) which in Fig. 2 shows that "OFF" was selected.

From parent step 7, selecting "<back" takes the program back to parent step 6, while selecting "fwd>" takes the program to final step 8 (S8). Step 8 shows a final screen indicating that the set up process is complete. Step 8 provides two options to the user. Selecting "<back" takes the user back to parent step 7. Selecting "exit>" exits the setup program.

Once the setup process has been successfully completed and the user selects the "exit>" option in step 8, the program finally permits operation of the system as the setup process has been duly followed and the unit should be properly configured. With this arrangement, the setup process cannot easily be forgotten or otherwise missed after the initial installation of the system.

Within the setup program, each option or parameter to be set comprises a parent step and at least one child step. During the initial configuration, the setup program starts each new option or parameter setting in the child step rather than the parent step to ensure that a value is positively selected. The parent step then provides a review stage to check the option or parameter value that was set before confirming that value by moving to the next step. As well as ensuring that all options are duly considered and set, this process of forcing the user through the child steps also minimizes the number of button presses that are required to fully execute the process.

It will be appreciated that step 8 is not essential. Step 7 could have an "exit>" option instead of a "fwd>" option, while achieving the same functionality.

It will be appreciated that the positioning (and the order) of steps 6 and 7 within the process is not important as these options could be set at any point. However, as they are optional features of this example system which enhance functionality, they are positioned at the end of the process, after the essential setup steps for configuring the main system operation.

If the unit requires a port configuration setting, this must be completed before any fan speeds can be set as the port configuration setting determines which fan within the unit is the extract fan and which fan is the supply fan.

For optimal configuration, the extract boost speed should be set before the supply boost speed and before the extract trickle speed. The supply boost speed should likewise be set before the supply trickle speed.

Although the configuration set out in Fig. 2 and described above is preferred, it will be appreciated that the extract trickle speed could be set before the supply boost speed without greatly affecting the optimality of the process.

After the setup program has been run, a user can return to the menu system to make adjustments to the options or parameters. At this stage it is not necessary to fully complete the whole setup process in sequence and so the program may permit subsequent navigation of the menu structure by moving back and forth through the parent steps without accessing the child steps. The user can then enter the appropriate child step from its parent for the option or parameter that needs to be adjusted. Therefore the menu system is simple and quick to use during subsequent use as well as requiring thorough execution during the initial setup process.

## Claims

1. A ventilation system comprising a control unit for controlling extraction and/or supply of air within a building, **characterized in that** said control unit is arranged such that it will not operate to supply and/or extract air until after a setup program (100) has been successfully completed.

2. A ventilation system as claimed in claim 1, wherein the system comprising a control unit for controlling extraction and/or supply of air within a building,
wherein said control unit is capable of switching at least one fan between a trickle speed and a boost speed,
wherein said control unit is provided with a setup program (100), and wherein said setup program (100) requires a user to set the boost fan speed before setting the trickle fan speed.

3. A ventilation system as claimed in claim 2, wherein the fan is an extraction fan.

4. A ventilation system as claimed in claim 3, wherein the unit further comprises at least one supply fan and the unit is capable of switching said supply fan between a trickle speed and a boost speed.

5. A ventilation system as claimed in claim 4, wherein said setup program (100) requires a user to set the supply fan boost speed before setting the supply fan trickle speed.

6. A ventilation system as claimed in claim 4 or 5, wherein said setup program (100) requires a user to set the extract fan boost speed and the supply fan boost speed before setting the extract fan trickle speed or supply fan trickle speed.

7. A ventilation system as claimed in any preceding claim, wherein the system comprises at least one extract valve within the building through which air is extracted and at least one supply valve within the building through which air is supplied.

8. A ventilation system as claimed in any preceding claim, wherein the system comprises at least two extract valves within the building through which air is extracted.

9. A ventilation system as claimed in any preceding claim, wherein the system comprises at least two supply valves within the building through which air is supplied.

10. A ventilation system as claimed in any preceding claim, wherein the setup program (100) is controlled by means of a rotary dial (55) and a button.

11. A ventilation system as claimed in any preceding claim, wherein said rotary dial (55) is also said button.

12. A ventilation system as claimed in any preceding claim, wherein said setup program (100) includes a step (S1) of setting the handedness of the unit before any steps (S2-S5) for setting fan speeds.

13. A method of commissioning a ventilation system for use after installation, comprising:
activating a setup program (100), said setup program (100) comprising a sequence of a plurality of setup steps (S0-S8) for execution by a user;
presenting said plurality of setup steps (S0-S8) to the user in sequence; and **characterized by**
only after said setup program (100) has been fully executed successfully, enabling operation of said ventilation system.

## Patentansprüche

1. Belüftungssystem, das eine Steuereinheit zum Steuern von Absaugung und/oder Zufuhr von Luft innerhalb eines Gebäudes umfasst, **dadurch gekennzeichnet, dass** die Steuereinheit derart eingerichtet ist, dass sie erst funktioniert, um Luft zuzuführen und/oder abzusaugen, nachdem ein Setup-Programm (100) erfolgreich abgeschlossen wurde.

2. Belüftungssystem nach Anspruch 1, wobei das System eine Steuereinheit zum Steuern von Absaugung und/oder Zufuhr von Luft innerhalb eines Gebäudes umfasst,
wobei die Steuereinheit fähig ist, mindestens ein Gebläse zwischen einer Erhaltungsdrehzahl und einer Boost-Drehzahl umzuschalten,
wobei die Steuereinheit mit einem Setup-Programm (100) versehen ist, und wobei das Setup-Programm (100) erfordert, dass ein Benutzer die Boost-Gebläsedrehzahl einstellt, bevor die Erhaltungsgebläsedrehzahl eingestellt wird.

3. Belüftungssystem nach Anspruch 2, wobei das Gebläse ein Absauggebläse ist.

4. Belüftungssystem nach Anspruch 3, wobei die Einheit weiter mindestens ein Zufuhrgebläse umfasst, und die Einheit fähig ist, das Zufuhrgebläse zwischen einer Erhaltungsdrehzahl und einer Boost-Drehzahl umzuschalten.

5. Belüftungssystem nach Anspruch 4, wobei das Setup-Programm (100) erfordert, dass ein Benutzer die Zufuhrgebläse-Boost-Drehzahl einstellt, bevor die Zufuhrgebläseerhaltungsdrehzahl eingestellt wird.

6. Belüftungssystem nach Anspruch 4 oder 5, wobei das Setup-Programm (100) erfordert, dass ein Benutzer die Abzuggebläse-Boost-Drehzahl und die Zufuhrgebläseerhaltungsdrehzahl einstellt, bevor die Abzuggebläseerhaltungsdrehzahl oder die Zufuhrgebläseerhaltungsdrehzahl eingestellt wird.

7. Belüftungssystem nach einem vorstehenden Anspruch, wobei das System mindestens ein Abzugsventil innerhalb des Gebäudes umfasst, durch das Luft abgesaugt wird, und mindestens ein Zufuhrventil innerhalb des Gebäudes, durch das Luft zugeführt wird.

8. Belüftungssystem nach einem vorstehenden Anspruch, wobei das System mindestens zwei Abzugsventile innerhalb des Gebäudes, durch die Luft abgezogen wird, umfasst.

9. Belüftungssystem nach einem vorstehenden Anspruch, wobei das System mindestens zwei Zufuhrventile innerhalb des Gebäudes, durch die Luft zugeführt wird, umfasst.

10. Belüftungssystem nach einem vorstehenden Anspruch, wobei das Setup-Programm (100) mittels einer Wählscheibe (55) und eines Knopfs gesteuert wird.

11. Belüftungssystem nach einem vorstehenden Anspruch, wobei die Wählscheibe (55) auch der Knopf ist.

12. Belüftungssystem nach einem vorstehenden Anspruch, wobei das Setup-Programm (100) einen Schritt (S1) des Einstellens der Händigkeit der Einheit vor den Schritten (S2 bis S5) zum Einstellen der Gebläsedrehzahlen beinhaltet.

13. Verfahren zum Inbetriebnehmen eines Belüftungssystems zur Verwendung nach Installation, das umfasst:
Aktivieren eines Setup-Programms (100), wobei das Setup-Programm (100) eine Folge einer Vielzahl von Einstellschritten (S0 bis S8) zur Ausführung durch einen Benutzer umfasst;
Präsentieren der Vielzahl von Setup-Schritten (S0 bis S8) für den Benutzer in einer Folge; und **gekennzeichnet durch**
Aktivieren des Betriebs des Belüftungssystems erst, nachdem das Setup-Programm (100) vollständig erfolgreich ausgeführt wurde.

## Revendications

1. Système de ventilation comprenant une unité de commande pour commander une extraction d'air et/ou une alimentation en air à l'intérieur d'un bâtiment, **caractérisé en ce que** ladite unité de commande est agencée de sorte à ne pas fonctionner pour alimenter en air et/ou extraire de l'air tant qu'un programme d'installation (100) n'a pas été achevé avec succès.

2. Système de ventilation selon la revendication 1, dans lequel le système comprend une unité de commande pour commander une extraction d'air et/ou une alimentation en air à l'intérieur d'un bâtiment,
dans lequel ladite unité de commande est capable de faire passer au moins un ventilateur entre une vitesse continue et une vitesse accélérée,
dans lequel ladite unité de commande est pourvue d'un programme d'installation (100), et
dans lequel ledit programme d'installation (100) nécessite qu'un utilisateur règle la vitesse accélérée du ventilateur avant de régler la vitesse continue du ventilateur.

3. Système de ventilation selon la revendication 2, dans lequel le ventilateur est un ventilateur d'extraction.

4. Système de ventilation selon la revendication 3, dans lequel l'unité comprend en outre au moins un ventilateur d'alimentation et l'unité est capable de faire passer ledit ventilateur d'alimentation entre une vitesse continue et une vitesse accélérée.

5. Système de ventilation selon la revendication 4, dans lequel ledit programme d'installation (100) nécessite qu'un utilisateur règle la vitesse accélérée du ventilateur d'alimentation avant de régler la vitesse continue du ventilateur d'alimentation.

6. Système de ventilation selon la revendication 4 ou 5, dans lequel ledit programme d'installation (100) nécessite qu'un utilisateur règle la vitesse accélérée du ventilateur d'extraction et la vitesse accélérée du ventilateur d'alimentation avant de régler la vitesse continue du ventilateur d'extraction ou la vitesse continue du ventilateur d'alimentation.

7. Système de ventilation selon une quelconque revendication précédente, dans lequel le système comprend au moins une vanne d'extraction à l'intérieur du bâtiment à travers laquelle de l'air est extrait et au moins une vanne d'alimentation à l'intérieur du bâtiment à travers laquelle de l'air est fourni.

8. Système de ventilation selon une quelconque revendication précédente, dans lequel le système comprend au moins deux vannes d'extraction à l'intérieur du bâtiment à travers lesquelles de l'air est extrait.

9. Système de ventilation selon une quelconque revendication précédente, dans lequel le système comprend au moins deux vannes d'alimentation à l'intérieur du bâtiment à travers lesquelles de l'air est fourni.

10. Système de ventilation selon une quelconque revendication précédente, dans lequel le programme d'installation (100) est commandé au moyen d'un cadran rotatif (55) et d'un bouton.

11. Système de ventilation selon une quelconque revendication précédente, dans lequel ledit cadran rotatif (55) est également ledit bouton.

12. Système de ventilation selon une quelconque revendication précédente, dans lequel ledit programme d'installation (100) comprend une étape (S1) de réglage du sens de rotation de l'unité avant toute étape (S2-S5) de réglage des vitesses de ventilateur.

13. Procédé de mise en service d'un système de ventilation pour une utilisation après installation, comprenant :
l'activation d'un programme d'installation (100), ledit programme d'installation (100) comprenant une séquence d'une pluralité d'étapes d'installation (S0-S8) à des fins d'exécution par un utilisateur ;
la présentation de ladite pluralité d'étapes d'installation (S0-S8) à l'utilisateur en séquence ; et **caractérisé par**
seulement après que ledit programme d'installation (100) a été entièrement exécuté avec succès, le fait de permettre le fonctionnement dudit système de ventilation.
